# EUROPEAN PATENT SPECIFICATION

(11) **EP 3 473 350 B1**
(45) Date of publication and mention of the grant of the patent: **28.12.2022**
(21) Application number: 18200526.4
(22) Date of filing: 15.10.2018
(51) Int. Cl.: B22C 7/02, B22C 9/04, B22C 9/10, B22C 9/22, B22C 13/08, B28B 7/34, B28B 1/00

(54) **METHOD FOR FABRICATING A HIGH TEMPERATURE ENGINEERING STIFFNESS CORE-SHELL MOLD FOR CASTING**
VERFAHREN ZUR HERSTELLUNG EINER KERN-SCHALE-GIESSFORM MIT HOCHTEMPERATURKONSTRUKTIONSSTEIFE
PROCEDE DE FABRICATION D'UN MOULE NOYAU-ENVELOPPE À HAUTE RIGIDITÉ ET À HAUTE TEMPÉRATURE POUR COULAGE

(30) Priority: 18.10.2017 US 201715787384
(43) Date of publication of application: 24.04.2019
(73) Proprietor: General Electric Company, Schenectady, NY 12345 (US)
(72) Inventor: GARAY, Gregory Terrence, West Chester, OH Ohio 45069-3807 (US); YANG, Xi, Alpha, OH Ohio 45301 (US); HAMPSHIRE, Joseph, Cincinnati, OH Ohio 45215 (US); PRZESLAWSKI, Brian David, Alpha, OH Ohio 45301 (US)
(74) Representative: Hafner & Kohl PartmbB

(56) References cited:
- GB-A- 2 346 340
- US-A- 6 117 612
- US-A1- 2016 221 262
- Chang-Jun Bae: "Integrally Cored Ceramic Investment Casting Mold Fabricated by Ceramic Stereolithography", , 1 January 2008 (2008-01-01), XP055437811, Retrieved from the Internet: URL:https://deepblue.lib.umich.edu/bitstre am/handle/2027.42/61652/baecj_1.pdf?sequen ce=1 [retrieved on 2018-01-02]

## Description

### INTRODUCTION

The disclosure generally relates to high temperature engineering stiffness core-shell mold components for casting and processes utilizing these components. The core-shell mold made in accordance with the present invention utilizes structural supports to accommodate ceramic pieces made via an additive process. The high temperature structural supports may be utilized during a liquid metal pouring phase of a casting process to improve casting cooling rates. As such, the core-shell molds provide useful properties in casting operations such as in the casting of superalloys used to make turbine blades and stator vanes for jet aircraft engines or power generation turbine components.

### BACKGROUND

A gas turbine engine generally includes at least one compressor to pressurize air to be channeled into a combustor. The engine may include at least one combustor in which at least a portion of the channeled pressurized air is mixed with fuel and ignited. Hot gasses from the compressor flow downstream through at least one turbine section. Each turbine section has rotating blades rotating about an axis and contained within an engine housing. The turbine section or sections can power any one of the compressor, a fan, a shaft, and/or may provide thrust through expansion through a nozzle.

The turbine blades and/or stator vanes in the turbine portions must be able to withstand thermal stresses due to high temperatures and large temperature fluctuations as well as forces due to the high rotational speed experienced during normal operation of the turbine. As the pressure ratio and efficiency of turbines have increased, the thermal stresses the high pressure and low pressure turbine portion are exposed to have also increased. Accordingly, in combination with manufacturing components of the turbine (for example, turbine blades and stator vanes) from a high-temperature resistant material, effective cooling of the turbine blades, stator vanes and other components have become increasingly important and challenging. To counteract the radiation and convection of heat to the turbine section, several heat removal techniques have been employed in the past; fluid cooling is generally employed to prolong the life of the turbine components. Further, small cooling holes have been drilled though the blade at angles optimized to remove heat and provide a thermal barrier on the surface of each airfoil surface of the turbine blades and stator vanes. Passages are also formed within the turbine and/or stator vanes to provide convection cooling of the surface of each airfoil.

The desire for increased cooling efficiency within turbine engine has led to complex internal cooling passages within turbine components. Conventional techniques for manufacturing engine parts and components involve the process of investment or lost-wax casting. One example of investment casting involves the manufacture of a typical blade used in a gas turbine engine. A turbine blade and/or stator vane typically includes hollow airfoils that have radial channels extending along the span of a blade having at least one or more inlets for receiving pressurized cooling air during operation of the engine. Various cooling passages in a blade typically include a serpentine channel disposed in the middle of the airfoil between the leading and trailing edges. The airfoil typically includes inlets extending through the blade for receiving pressurized cooling air, which include local features such as short turbulator ribs or pins for increasing the heat transfer between the heated sidewalls of the airfoil and the internal cooling air.

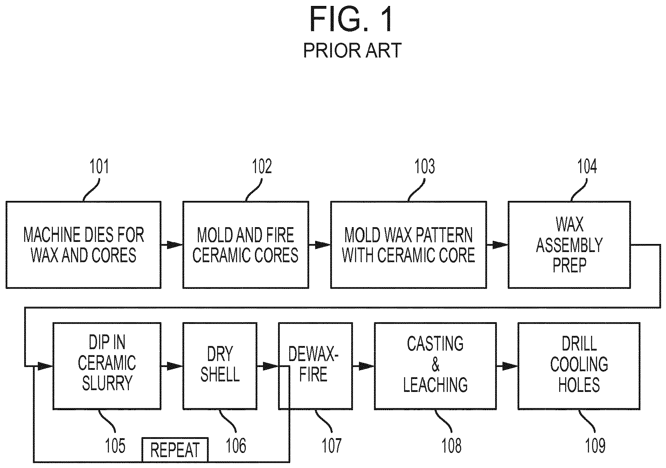

The manufacture of these turbine blades, typically from high strength, superalloy metal materials, involves numerous steps, as shown in FIGS. 1-4. As shown in FIG. 1, forming a cast component using traditional investment casting typically includes steps of: machining of dies for the outer wax structure and for ceramic cores 101, molding and firing the ceramic cores 102, molding a wax pattern with ceramic core 103, wax assembly prep 104, dipping the wax assembly in ceramic slurry 105, drying the ceramic slurry to provide a shell 106, dewaxing the shell 107, casting and leaching 108, and drilling cooling holes 109.

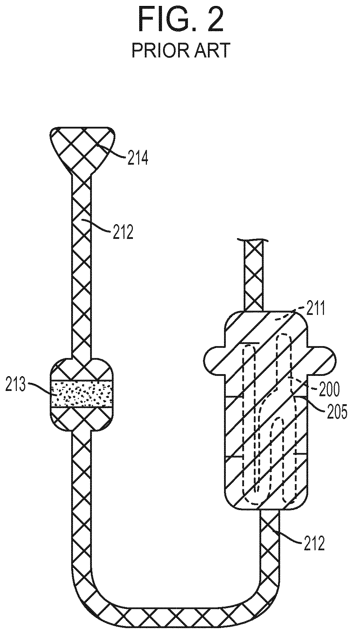

In the above-mentioned process, a precision ceramic core 200 is manufactured to conform to the serpentine cooling passages desired inside the turbine blade. A precision die or mold is also created which defines the precise 3-D external surface of the turbine blade including its airfoil, platform, and integral dovetail. The ceramic core 200 is assembled inside two die halves which form a space or void therebetween that define the resulting metal portions of the blade. A relatively rigid wax and/or plastic is injected into the assembled dies to fill the void and surround the ceramic core 200, at which point the ceramic core 200 is encapsulated within the wax. The two die halves are split apart and removed to expose and remove the rigid wax and/or plastic that has the precise configuration of the desired blade formed of a molded wax 211. The molded wax blade 211 with encapsulated ceramic core 200 is then attached to a wax tree structure 212. The wax tree structure 212 is formed of a paraffin wax or any wax that is less rigid than the wax used to form the molded wax blade 211. Because the wax of the wax tree 212 will ultimately define a flowpath for molten metal into the ceramic mold, the dimensional accuracy of the outer surface of the wax used to form the tree structure 212 is less crucial. Thus, a softer wax is generally used to form the individual paths of the wax tree 212 than for the precisely molded wax blade 211 of the desired wax blade. The wax blade 211 requires pins 205 for holding the core in place. The tree structure 212 may include a funnel shaped portion 214 for adding molten metal to the mold. As shown in FIGS. 2-4, the tree structure 212 also includes a ceramic filter 213 for filtration of molten metal in the casting operation.

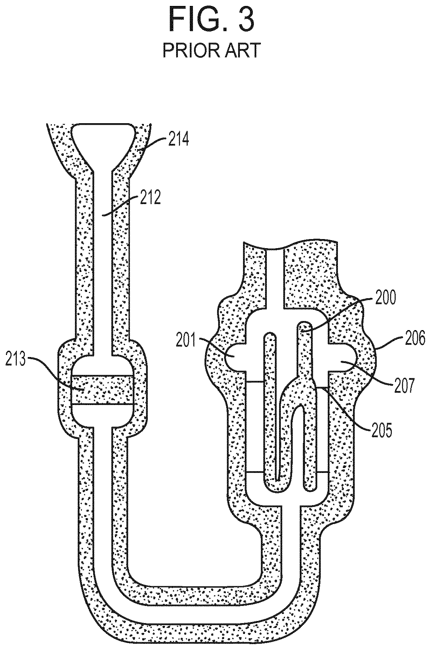

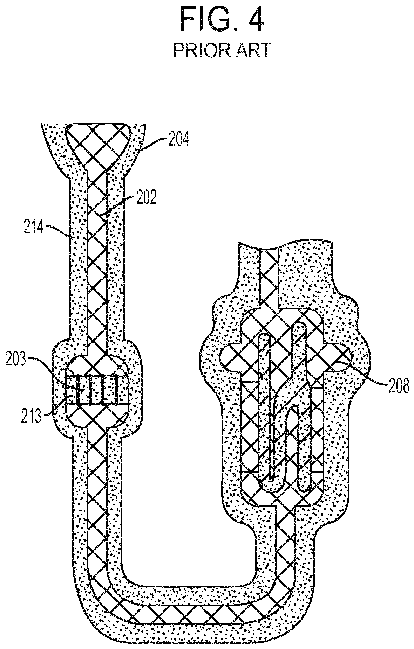

After wax injection and the attachment of wax passageways 212 which form the wax tree structure, the entire wax tree structure 212, ceramic filter 213, and wax turbine blade 211 is then coated with a ceramic material to form a ceramic shell 206, 204 as shown in FIG. 3. Then, the wax is melted and removed from the ceramic shell 206, leaving a corresponding void or space 201, 207 between the ceramic shell 206 and the internal ceramic core 200. Further, once the wax tree structure 212 is melted, the ceramic shell 204 defines a flow path in fluid communication with the void or space 201, 207. After the wax is removed, the ceramic core is held in place by pins 205. As shown in FIG. 4, molten superalloy metal 208 is then poured into the shell 206 through the flow path defined by a portion of the ceramic shell 204. The molten superalloy may include any one of stainless steel, aluminum, titanium, Inconel 625, Inconel 718, Inconel 188, cobalt chrome, nickel, among other metal materials or any alloy; such as nickel (Ni) superalloys, and/or Ni superalloy single crystal alloys. For example, the above alloys may include materials with trade names, Haynes 188^{®}, Haynes 625^{®}, Super Alloy Inconel 625^{™}, Chronin^{®} 625, Altemp^{®} 625, Nickelvac^{®} 625, Nicrofer^{®} 6020, Inconel 188, and any other material having material properties attractive for the formation of components using the above-mentioned techniques. The molten superalloy metal 208 fills the voids 201, 207 and encapsulates the ceramic core 200 contained in the shell 206. The molten metal 208 is cooled and solidifies, and then the external ceramic shell 206 and internal ceramic core 202 are suitably removed leaving behind the desired metallic turbine blade in which the internal cooling passages are found. In order to provide a pathway for removing the ceramic core material via a leaching process, a ball chute (not shown) and the tip pins (not shown) may be provided. Generally, after the leaching process, a ball chute and tip pin holes within the turbine blade must be subsequently brazed shut.

The cast turbine blade 208 typically undergoes additional post-casting modifications, such as drilling of suitable rows of film cooling holes through the sidewalls of the airfoil as desired for providing outlets for the internally channeled cooling air which then forms a protective cooling air film or blanket (generally referred to as film cooling) over the external surface of the airfoil during operation in the gas turbine engine. After the turbine blade is removed from the ceramic mold, pins 205 which held the ceramic core 200 form a passageway that is later brazed shut to provide the desired pathway of air through the internal voids of the cast turbine blade. However, these post-casting modifications are limited and given the ever increasing complexity of turbine engines and the recognized efficiency improvements provided by certain cooling circuits inside turbine blades, more complicated and intricate internal geometries are required. While investment casting is capable of manufacturing these parts, positional precision and intricate internal geometries become more complex to manufacture using these conventional manufacturing processes and thus increase manufacturing time and expense significantly. Accordingly, it was desirable to provide an improved casting method for three dimensional components having intricate internal voids and cooling circuits.

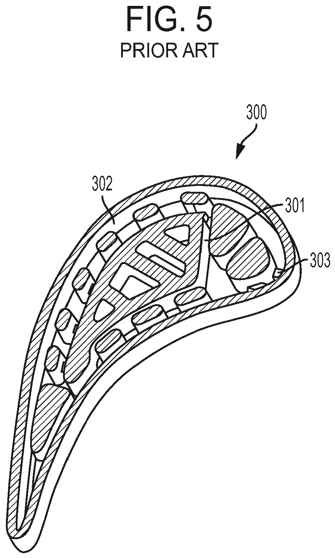

Additive manufacturing techniques and 3-D printing allowed molds to be manufactured without the toolpath and/or molding limitations associated with subtractive manufacturing. For example, methods for using 3-D printing to produce a ceramic core-shell mold are described in U.S. Patent No. 8,851,151 assigned to Rolls-Royce Corporation. The methods for making the molds include powder bed ceramic processes such as disclosed U.S. Patent No. 5,387,380 assigned to Massachusetts Institute of Technology, and selective laser activation (SLA) such as disclosed in U.S. Patent No. 5,256,340 assigned to 3D Systems, Inc. The ceramic core-shell molds according to the '151 patent are significantly limited by the printing resolution capabilities of these processes. As shown in FIG. 5, core portion 301 and shell portion 302 of integrated core-shell mold 300 is held together via a series of tie structures 303 provided at the bottom edge of the mold 300. Cooling passages are proposed in the '151 patent that include staggered vertical cavities joined by short cylinders, the length of which is nearly the same as its diameter. A superalloy turbine blade is then formed in the core-shell mold using known techniques disclosed in the '151 patent. After a turbine blade is cast in one of these core-shell molds, the mold is removed to reveal a cast superalloy turbine blade.

There still remains the need to prepare ceramic core-shell molds produced using higher resolution methods that are capable of providing fine detail cast features in the end-product of the casting process such as fine resolution capability necessary to print filaments extending between the core and shell portion of the mold of sufficiently small size and quantity to result in effusion cooling holes in the finished turbine blade or stator vane, for example. In the case of earlier powder bed processes, such as disclosed in U.S. Patent No. 5,387,380 assigned to Massachusetts Institute of Technology, the action of the powder bed recoater arm precludes formation of sufficiently fine filaments extending between the core and shell to provide an effusion cooling hole pattern in the cast part. Other known techniques such as selective laser activation (SLA) such as disclosed in U.S. Patent No. 5,256,340 assigned to 3D Systems, Inc. that employ a top-down irradiation technique may be utilized in producing an integrated core-shell mold in accordance with the present invention. However, the available printing resolution of these systems significantly limits the ability to make filaments of sufficiently small size to serve as effective cooling holes in the cast final product.

While the above-mentioned processes can be used to form integrated core-shell mold, it is advantageous to manufacture a core-shell mold using direct light processing (DLP). DLP differs from the above discussed powder bed and SLA processes in that the light curing of the polymer occurs through a window at the bottom of a resin tank that projects light upon a build platform that is raised as the process is conducted. With DLP an entire layer of cured polymer is produced simultaneously, and the need to scan a pattern using a laser is eliminated. Further, the polymerization occurs between the underlying window and the last cured layer of the object being built. The underlying window provides support allowing thin filaments of material to be produced without the need for a separate support structure. In other words, producing a thin filament of material bridging two portions of the build object is difficult and was typically avoided in the prior art. For example, the '151 patent discussed above in the background section of this application used vertical plate structures connected with short cylinders, the length of which was on the order of their diameter. Staggered vertical cavities are necessitated by the fact that the powder bed and SLA techniques disclosed in the '151 patent require vertically supported ceramic structures and the techniques are incapable of reliably producing filaments. For example, round cooling holes generally have a diameter of less than 2 mm corresponding to a cooling hole area below 3.2 mm². Production of a hole of such dimensions requires a resolution far below the size of the actual hole given the need to produce the hole from several voxels. This resolution is simply not available in a powder bed process. Similarly, stereolithography is limited in its ability to produce such filaments due to lack of support and resolution problems associated with laser scattering. But the fact that DLP exposes the entire length of the filament and supports it between the window and the build plate enables producing sufficiently thin filaments spanning the entire length between the core and shell to form a ceramic object having the desired cooling hole pattern. Although powder bed and SLA may be used to produce filaments, their ability to produce sufficiently fine filaments as discussed above is limited.

Further, in employing the above-mentioned DLP method of manufacturing a core-shell of the embodiment described above, various difficulties arise in integrating the use of a core-shell mold into an efficient manufacturing process. For example, the time required to form a core-shell mold having sufficient dimensional stability (e.g., wall thickness) using a DLP process may delay the manufacturing process and require the use of excess material. Further, in the molding process it may be desired to efficiently produce portions of a mold that do not require the same dimensional accuracy as is required in portions of the core-shell mold itself. For example, it may be desirable to produce passages for directing the flow of molten superalloy into a single or plurality of core-shell molds. Further, when forming a core-shell mold using a DLP process it may be desirable to improve the ease of removing the core-shell once the casting is completed. For example, the knockout process may be improved by producing a thinner core-shell, to reduce the likeliness that the cast product is damaged upon removal of the core-shell. It may also be desirable to control the thermal conductivity of the core-shell mold to control crystal growth and/or tailor the material properties of the cast component and/or manage the thermal strains in the ceramic material.

Other examples of the manufacturing of ceramic molds and core-shell molds via stereolithography are described in US6117612; US2016/0221262 A1 and in Chang-Jun Bae "Integrally Cored Ceramic Investment Casting Mold Fabricated by Ceramic Stereolithography" PhD dissertation (Materials Science and Engineering), University of Michigan 2008.GB2346340 A describes a core shell ceramic mold, wherein support pins are inserted in apertures in the core and project from the core to the shell.

### SUMMARY

The following presents a simplified summary of one or more aspects of the present disclosure in order to provide a basic understanding of such aspects. This summary is not an extensive overview of all contemplated aspects and is intended to neither identify key or critical elements of all aspects nor delineate the scope of any or all aspects. Its purpose is to present some concepts of one or more aspects in a simplified form as a prelude to the more detailed description that is presented later.

The foregoing and/or other aspects of the present invention may be achieved by a method of fabricating a ceramic mold according to claim 1.

The foregoing and/or aspects of the present invention may also be achieved by a method of preparing a cast component according to claim 9.

The foregoing and/or aspects of the present invention may also be achieved by an apparatus for preparing a cast component according to claim 13.

Other features and aspects may be apparent from the following detailed description, the drawings, and the claims.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
FIG. 1 is a block diagram showing the steps for conventional investment casting;
FIG. 2 is a diagram showing a conventional wax pattern attached to a wax tree structure for investment casting of a turbine blade;
FIG. 3 is a diagram showing the conventional ceramic mold of FIG. 2 after the wax has been removed;
FIG. 4 is a diagram showing the conventional ceramic mold of FIG. 2 after molten metal is poured into the mold;
FIG. 5 is a diagram showing a perspective view of a prior art integrated core-shell mold with ties connecting the core and shell portions;
FIG. 6 is a block diagram illustrating the casting process according to an embodiment of the present invention;
FIG. 7 is a diagram illustrating a cross-sectional side view of an integrated core-shell mold according to an embodiment of the present invention;
FIG. 8 is a diagram illustrating a cross-sectional side view of an integrated core-shell mold according to an example embodiment;
FIG. 9 is a diagram illustrating a cross-sectional side view of an integrated core-shell mold according to an embodiment of the present invention;
FIG. 10 is a diagram illustrating a perspective top view of the integrated core-shell mold in FIG. 9 according to an example embodiment;
FIG. 11 is a diagram illustrating a cross-sectional side view of an integrated core-shell mold according to another embodiment of the present invention;
FIG. 12 is a diagram illustrating a perspective top view of the integrated core-shell mold in FIG. 11 according to an example embodiment;
FIGS. 13A and 13B are diagrams illustrating a cross-sectional side view of an integrated core-shell mold according to another embodiment of the present invention;
FIGS. 14A and 14B are diagrams illustrating a cross-sectional side view of an integrated core-shell mold according to another embodiment of the present invention; and
FIGS. 15A and 15B are diagrams illustrating a cross-sectional side view of an integrated core-shell mold according to another embodiment of the present invention.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. For example, the present invention provides a preferred method for making cast metal parts, and preferably those cast metal parts used in the manufacture of jet aircraft engines. Specifically, the production of single crystal, nickel-based superalloy cast parts such as turbine blades, vanes, and shroud components can be advantageously produced in accordance with this invention. However, other cast metal components may be prepared using the techniques and integrated ceramic molds of the present invention. The invention is defined by the appended claims.

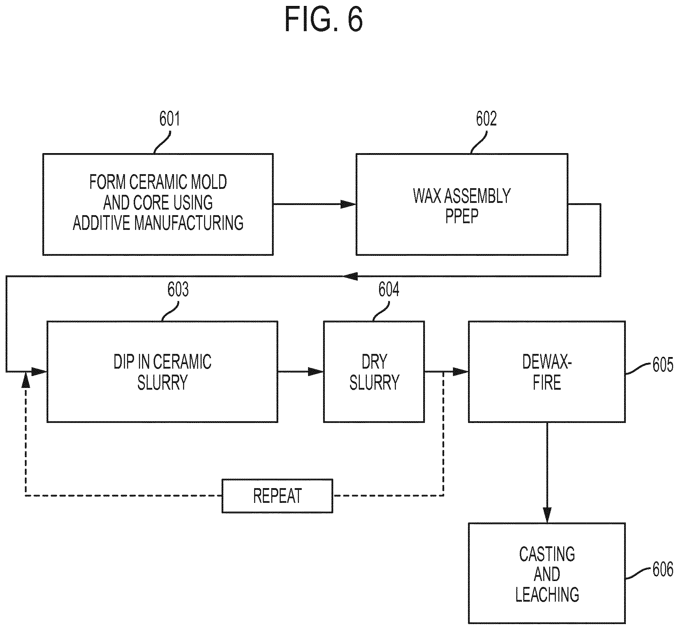

FIG. 6 is a block diagram illustrating the casting process according to an embodiment of the present invention. By employing a Direct Light Printing (DLP) process or any other additive manufacturing method to form a ceramic core-shell mold, the manufacturing of a component requires significantly less steps than typical investment casting. FIG. 6 shows the steps of forming a ceramic mold and core using additive manufacturing 601, prepping the wax assembly 602, dipping the core-shell mold into a ceramic slurry 603, drying the slurry 604, a dewaxing and/or firing process 605, and casting and leaching the ceramic material 606. It may be appreciated that the step of dipping the core-shell mold into the ceramic slurry 603 and drying the slurry 604 may be repeated as shown in FIG. 6. The above-mentioned process of forming a mold includes forming a ceramic mold and core using a DLP process such that the mold is formed as a core-shell structure and is formed of a first photopolymerizable ceramic material. Once a mold is formed, the mold may be joined with several molds and/or may have a wax portion added 602 which will form a flow path for the molten material. The core-shell mold and an additional wax structures added previously may then undergo a dipping or coating process 603 to form a ceramic coating on the outer surface of the shell of the core-shell mold and on the outer surface of any added wax structures. The core-shell mold may then undergo a drying process to the dry the slurry 604. As mentioned above, steps 603 and 604 may be repeated. Then, the core-shell mold and outer ceramic shell may undergo a dewaxing and/or firming process 605 to remove the wax and/or to sinter the ceramic materials which form the mold. It may be appreciated that steps 602, 603, 604, and 605 may be omitted if the ceramic mold and core in step 601 is manufactured to the final mold shape and ready for pouring. The molten super alloy may then be poured into the mold. Once the superalloy has solidified, the core-shell mold and outer shell may be removed through either leaching of the ceramic material and/or through mechanical removal of the mold.

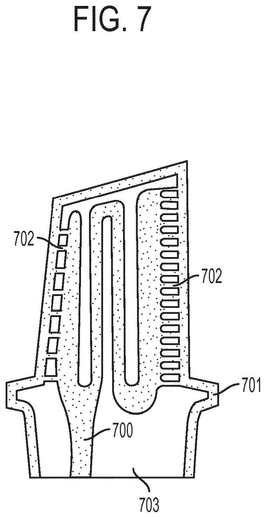

FIG. 7 is a diagram illustrating a cross-sectional side view of an integrated core-shell mold according to an embodiment of the present invention. As shown in FIG. 7, the core 700 is connected to the shell 701 through several filaments 702. The core-shell mold 700/701 defines a cavity 703 for investment casting a turbine blade.

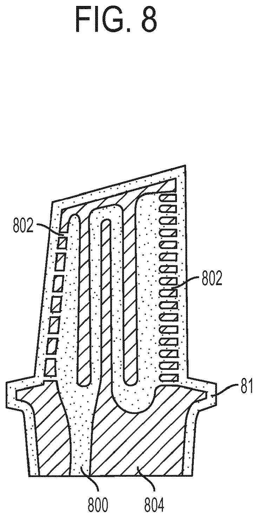

FIG. 8 is a diagram illustrating a cross-sectional side view of an integrated core-shell mold according to an example embodiment. As shown in FIG. 8, the cavity 703 in FIG. 7 is filled with a metal 804, such as a nickel based alloy, i.e., Inconel. Upon leaching of the ceramic core-shell, the resulting cast object is a turbine blade having a cooling hole pattern in the surface of the blade. It should be appreciated that although FIGS. 7 and 8 provide a cross sectional view showing cooling holes at the leading and trailing edge of the turbine blade, that additional cooling holes may be provided where desired including on the sides of the turbine blades or any other location desired. In particular, the present invention may be used to form cooling holes within the casting process in any particular design. In other words, one would be able to produce conventional cooling holes in any pattern where drilling was used previously to form the cooling holes. However, the present invention will allow for cooling hole patterns previously unattainable due to the limitations of conventional technologies for creating cooling holes within cast components, i.e., drilling.

According to an example embodiment, the present invention provides a methodology of using high temperature engineered support mechanisms during the liquid metal pouring phase of the casting process. As such, the amount of additive material and print time of the additive ceramic process is minimized.

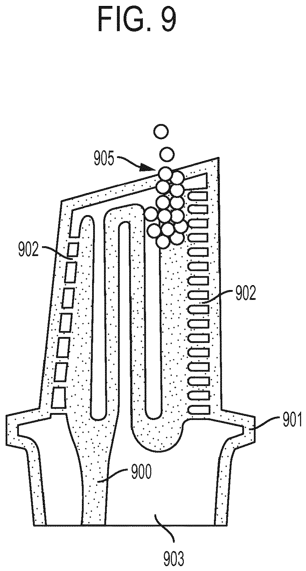

FIG. 9 is a diagram illustrating a cross-sectional side view of an integrated core-shell mold according to an embodiment of the present invention. As shown in FIG. 9, the core 900 is connected to the shell 901 through several filaments 902. The core-shell mold 900/901 defines a cavity 903 for investment casting a turbine blade. The core-shell mold 900/901 is formed with an opening 905 to allow for a support member with selective stiffness to be inserted into the core-shell mold 900/901. In a preferred embodiment, a support member such as spheres 906 having a selective stiffness may be inserted in the opening 905. The spheres 906 may be alumina. Although FIG. 9 shows the core-shell mold 900/901 configured with the opening 905 at an upper portion of the core-shell mold 900/901, the present invention is not limited thereto and the core-shell mold may be configured with an opening to accommodate spheres at selective areas of the core-shell mold. The spheres may be inserted into the core-shell mold at selective areas where needed during the casting process. It can be appreciated that inserting spheres in selective areas throughout the core-shell mold allows for the shell to remain thin in most places which improves the cooling rate during the casting process. Non-spherical irregular shaped support members may also be used instead of the spheres 906 as shown in FIG. 9. As such, the amount of additive ceramic material needed and the print time for the casting process is minimized.

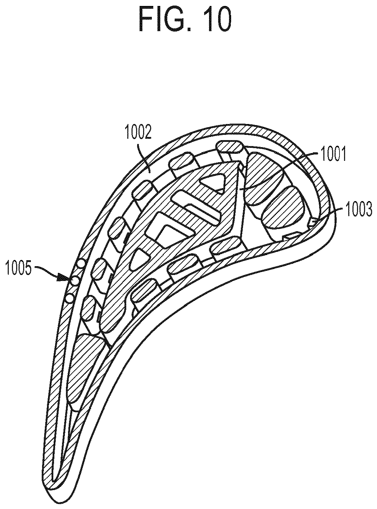

FIG. 10 is a diagram illustrating a perspective view of the integrated core-shell mold in FIG. 9 according to an example embodiment. As shown in FIG. 10, the core portion 1001 and shell portion 1002 of the integrated core-shell mold is held together via a series of tie structures 1003 provided at the bottom edge of the mold. According to an example embodiment, FIG. 10 shows a perspective view in which spheres 1005 may be inserted in the core-shell 1002.

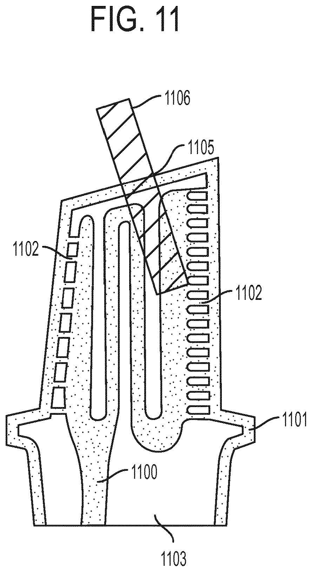

FIG. 11 is a diagram illustrating a cross-sectional side view of an integrated core-shell mold according to another embodiment of the present invention. As shown in FIG. 11, the core 1100 is connected to the shell 1101 through several filaments 1102. The core-shell mold 1100/1101 defines a cavity 1103 for investment casting a turbine blade. According to an example embodiment, the core-shell mold 1100/1101 is formed with an opening 1105 to allow for a support member with selective stiffness to be inserted into the core-shell mold 1100/1101. In a preferred embodiment, a support member such as metal sheets 1106 having a selective stiffness may be inserted in the opening 1105. The metal sheets 1106 may have a high melting temperature that is higher than the metal used for casting. Although FIG. 11 shows the core-shell mold 1100/1101 configured with the opening 1105 at an upper portion of the core-shell mold 1100/1101, the present invention is not limited thereto and the core-shell mold may be configured with an opening to accommodate metal sheets at selective areas of the core-shell mold. For example, the metal sheets may be inserted into the core-shell mold at selective areas where needed during the casting process. It can be appreciated that inserting metal sheets in selective areas throughout the core-shell mold allows for the shell to remain thin in most places which improves the cooling rate during the casting process. Selective areas with the metal sheets can also increase conductivity and improve the cooling rate. As such, the amount of additive ceramic material needed and the print time for the casting process is minimized.

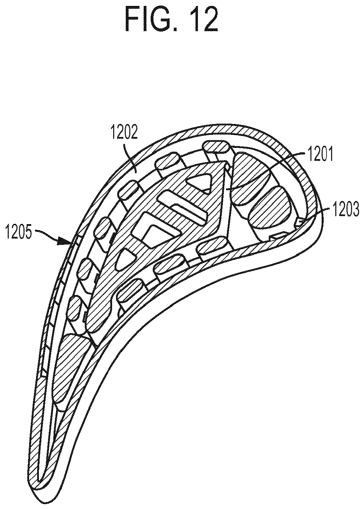

FIG. 12 is a diagram illustrating a perspective view of the integrated core-shell mold in FIG. 11 according to an example embodiment. As shown in FIG. 12, the core portion 1201 and shell portion 1202 of the integrated core-shell mold is held together via a series of tie structures 1203 provided at the bottom edge of the mold. According to an example embodiment, FIG. 12 shows a perspective view in which metal sheets 1205 may be inserted in the core-shell 1202.

As described above, the present invention may provide internal support features such as, for example, high temperature spheres and metal sheets. In other exemplary embodiments, the core-shell mold may include external supports features such as, for example, ceramic containment blocks, metal clips, and metal bands on an outer portion of the core-shell mold having internal support features. It may be appreciated that the internal supports and the external supports may be made of a ceramic refractory metal having a melting temperature higher that is higher than the melting temperature of the metal used in casting the cast component.

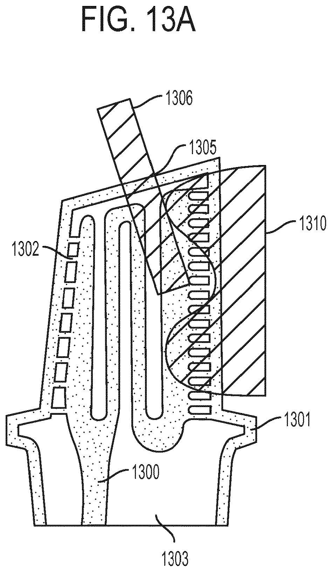

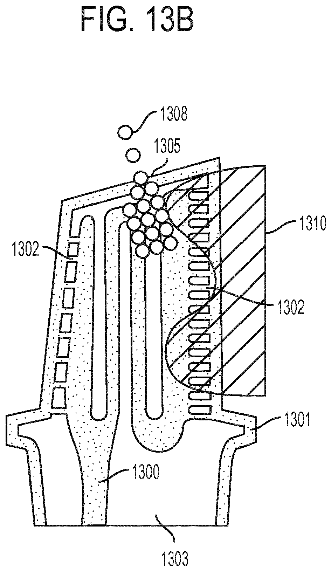

FIGS. 13A and 13B are diagrams illustrating a cross-sectional side view of an integrated core-shell mold according to another embodiment of the present invention. According to an exemplary embodiment as shown in FIG. 13A, a support member such as metal sheets 1306 having a selective stiffness may be inserted in the opening 1305, and an external outer portion of the core-shell mold 1300/1301 may be configured with high temperature metal clips 1310. The metal clips 1310 may also have a selective stiffness to support the core-shell mold 1300/1301 where needed. The metal sheets 1306 and the metal clips 1310 may both have a melting temperature higher than the melting temperature of the metal used for casting. An exemplary embodiment with metal sheets 1306 and metal clips 1310 as shown in FIG. 13A is provided, but the present invention may not be limited thereto, and thus, may provide the metal sheets and metal clips at selective areas about the core-shell mold where needed during the casting process. In another exemplary embodiment as shown in FIG. 13B, spheres 1308 may be inserted in the opening 1305 with the high temperature metal clips 1310 at an external outer portion of the core-shell mold 1300/1301. The spheres 1308 and the metal clips 1310 may both have a melting temperature higher than the melting temperature of the metal used for casting.

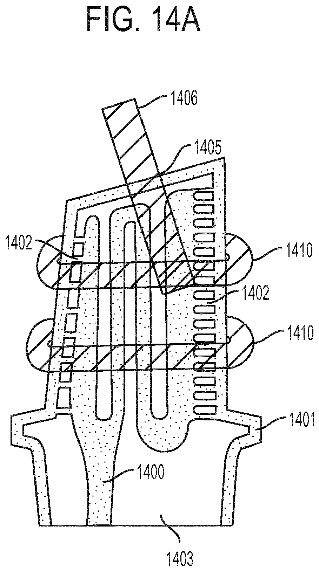

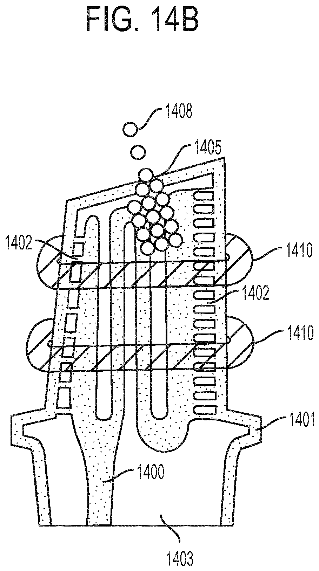

FIGS. 14A and 14B are diagrams illustrating a cross-sectional side view of an integrated core-shell mold according to another embodiment of the present invention. According to an exemplary embodiment as shown in FIG. 14A, a support member such as metal sheets 1406 may be inserted in the opening 1405, and an external outer portion of the core-shell mold 1400/1401 may be configured with high temperature metal bands 1410. The metal bands 1410 may also have a selective stiffness to support the core-shell mold 1400/1401 where needed. The metal sheets 1406 and the metal bands 1410 may both have a melting temperature higher than the melting temperature of the metal used for casting. An exemplary embodiment with metal sheets 1406 and metal bands 1410 as shown in FIG. 14A is provided, but the present invention may not be limited thereto, and thus, may provide the metal sheets and metal bands at selective areas about the core-shell mold where needed during the casting process. In another exemplary embodiment as shown in FIG. 14B, spheres 1408 may be inserted in the opening 1405 with the high temperature metal bands 1410 at an external outer portion of the core-shell mold 1400/1401. The spheres 1408 and the metal bands 1410 may both have a melting temperature higher than the melting temperature of the metal used for casting.

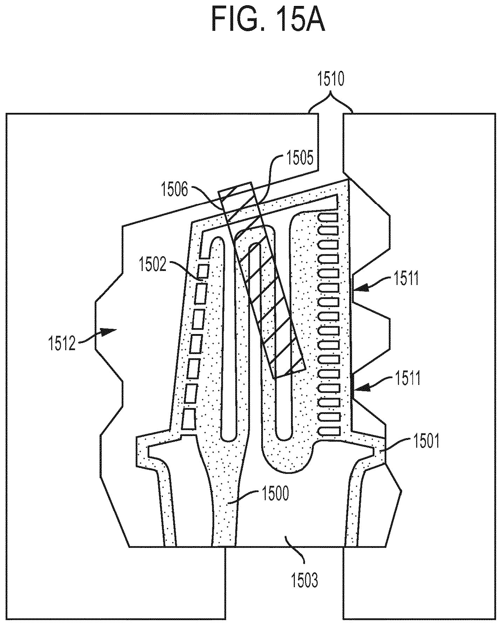

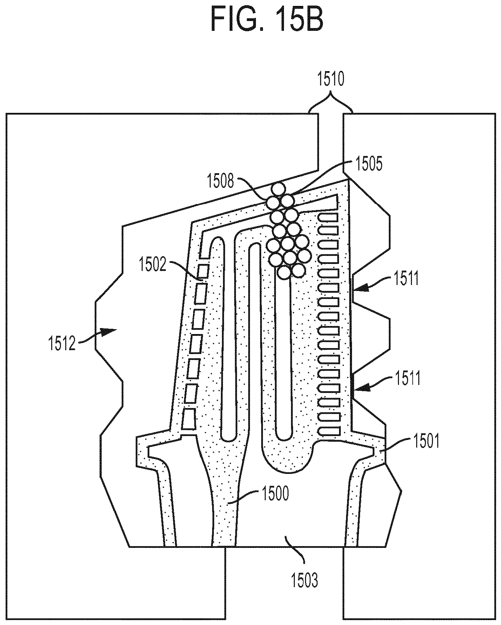

FIGS. 15A and 15B are diagrams illustrating a cross-sectional side view of an integrated core-shell mold according to another embodiment of the present invention. According to an exemplary embodiment as shown in FIG. 15A, metal sheets 1506 may be inserted in the opening 1505, and an external outer portion of the core-shell mold 1500/1501 may be configured with ceramic containment blocks 1510. The containment blocks 1510 may be engineered with cooling passages 1512 therein to improve casting cooling rates. The containment blocks may also be engineered with stiffening ribs 1511 to support additive ceramic where needed. In another exemplary embodiment as shown in FIG. 15B, spheres 1508 may be inserted in the opening 1505 with the containment blocks 1510 at an external outer portion of the core-shell mold 1500/1501.

In accordance with the above-described example embodiments, the present invention provides structural supports to accommodate ceramic pieces made via an additive process. An aspect of the present invention provides a methodology of using high temperature supports during the liquid pouring phase of the casting process. As such, the material and print time of the additive ceramic process is minimized and support needed during the casting process is provided. Engineered features such as, for example, high temperature spheres and metal sheets provide stiffness at selective areas while allowing the use of thin ceramic shells and improved casting cooling rates. Additionally, the present invention may utilize external engineered support features such as, for example, ceramic containment blocks, metal clips, and metal bands along with the spheres and metal sheets to further provide structural support during the additive process.

In an aspect, the present invention relates to the core-shell mold structures of the present invention incorporated or combined with features of other core-shell molds produced in a similar manner. The following patent applications include disclosure of these various aspects and their use:

U.S. Patent Application No. 15/377,728, titled "INTEGRATED CASTING CORE-SHELL STRUCTURE" with attorney docket number 037216.00036/284976, and filed December 13, 2016;

U.S. Patent Application No. 15/377,711, titled "INTEGRATED CASTING CORE-SHELL STRUCTURE WITH FLOATING TIP PLENUM" with attorney docket number 037216.00037/284997, and filed December 13, 2016;

U.S. Patent Application No. 15/377,796, titled "MULTI-PIECE INTEGRATED CORE-SHELL STRUCTURE FOR MAKING CAST COMPONENT" with attorney docket number 037216.00033/284909, and filed December 13, 2016;

U.S. Patent Application No. 15/377,746, titled "MULTI-PIECE INTEGRATED CORE-SHELL STRUCTURE WITH STANDOFF AND/OR BUMPER FOR MAKING CAST COMPONENT" with attorney docket number 037216.00042/284909A, and filed December 13, 2016;

U.S. Patent Application No. 15/377,673, titled "INTEGRATED CASTING CORE SHELL STRUCTURE WITH PRINTED TUBES FOR MAKING CAST COMPONENT" with attorney docket number 037216.00032/284917, and filed December 13, 2016;

U.S. Patent Application No. 15/377,787, titled "INTEGRATED CASTING CORE SHELL STRUCTURE FOR MAKING CAST COMPONENT WITH NON-LINEAR HOLES" with attorney docket number 037216.00041/285064, and filed December 13, 2016;

U.S. Patent Application No. 15/377,783, titled "INTEGRATED CASTING CORE SHELL STRUCTURE FOR MAKING CAST COMPONENT WITH COOLING HOLES IN INACCESSIBLE LOCATIONS" with attorney docket number 037216.00055/285064A, and filed December 13, 2016;

U.S. Patent Application No. 15/377766, titled "INTEGRATED CASTING CORE SHELL STRUCTURE FOR MAKING CAST COMPONENT HAVING THIN ROOT COMPONENTS" with attorney docket number 037216.00053/285064B, and filed December 13, 2016.

This written description uses examples to disclose the invention, including the preferred embodiments, and also to enable any person skilled in the art to practice the invention, including making and using any devices or systems and performing any incorporated methods. The patentable scope of the invention is defined by the claims.

## Claims

1. A method for fabricating a ceramic casting mold (900, 901), comprising:
(a) contacting a cured portion of a workpiece with a liquid ceramic photopolymer;
(b) irradiating a portion of the liquid ceramic photopolymer adjacent to the cured portion through a window contacting the liquid ceramic photopolymer;
(c) removing the workpiece from the uncured liquid ceramic photopolymer;
(d) repeating steps (a) - (c) until a ceramic casting mold (900, 901) is formed, the ceramic casting mold (900, 901) comprising an integrated core-shell mold having a core (900), a shell (901) surrounding the core (900), a cavity (903) between the core (900) and the shell (901), a first opening extending through the shell (901) to the cavity (903) for creating a cast article, and a second opening (905) extending through the shell (901) to the cavity (903) for receiving a support member, and
(e) inserting a support member through the second opening (905) into the cavity (903).

2. The method of claim 1, further comprising pouring a liquid metal into the first opening and solidifying the liquid metal to form the cast article.

3. The method of claim 1 or claim 2, wherein the support member is at least one sphere (906).

4. The method of any of claims 1-3, wherein the support member is at least one metal sheet (1106).

5. The method of any of claims 1-4, wherein the support member is made of a ceramic refractory metal and engineered to provide stiffness at various portions of the ceramic casting mold (900, 901).

6. The method of any of claims 1-5, wherein the support member has a melting temperature that is higher than the melting temperature of a metal used in casting.

7. The method of any of claims 1-6, wherein the support member is a plurality of alumina spheres (906) accommodated in the second opening (905) to provide support to the ceramic casting mold (900, 901).

8. The method of any of claims 1-7, wherein the ceramic casting mold (900, 901) is configured with at least one support member (1310, 1410, 1510) at an outer portion of the ceramic casting mold (900, 901), the at least one support member (1310, 1410, 1510) at the outer portion being made of a ceramic refractory metal and having a melting temperature that is higher than the melting temperature of a metal used in casting.

9. A method of preparing a cast component, comprising:
forming a printed ceramic casting mold (900, 901), the ceramic casting mold (900, 901) comprising,
an integrated core-shell mold having a core (900), a shell (901) surrounding the core (900), a cavity (903) between the core (900) and the shell (901), a first opening extending through the shell (901) to the cavity (903) for creating the cast component, and a second opening (905) extending through the shell (901) to the cavity (903) for receiving a support member, and
inserting a support member through the second opening (905) into the cavity (903).

10. The method of claim 9, further comprising pouring a liquid metal into the first opening and solidifying the liquid metal to form the cast component.

11. The method of claim 9 or claim 10, wherein the support member has a melting temperature that is higher than the melting temperature of a metal used in casting.

12. The method of any of claims 9-11, wherein the support member is a plurality of alumina spheres (906) accommodated in the second opening (905) to provide support to the ceramic casting mold (900, 901).

13. An apparatus for preparing a cast component in accordance with a method of any of claims 9-10, comprising:
a printed ceramic casting mold (900, 901), the ceramic casting mold (900, 901) comprising,
an integrated core-shell mold having a core (900), a shell (901) surrounding the core (900), a cavity (903) between the core (900) and the shell (901), a first opening extending through the shell (901) to the cavity (903) for creating the cast component, and a second opening (905) extending through the shell (901) to the cavity (903) for receiving a support member, and a support member inserted through the second opening (905) into the cavity (903).

14. The apparatus of claim 13, wherein the support member has a melting temperature that is higher than the melting temperature of a metal used in casting.

15. The apparatus of claim 13 or claim 14, wherein the printed ceramic casting mold (900, 901) is configured with at least one support member (1310, 1410, 1510) at an outer portion of the printed ceramic casting mold (900, 901), the at least one support member (1310, 1410, 1510) at the outer portion being made of a ceramic refractory metal and having a melting temperature that is higher than the melting temperature of a metal used in casting.

## Patentansprüche

1. Verfahren zur Herstellung einer keramischen Gießform (900, 901), umfassend:
(a) In-Kontakt-Bringen eines gehärteten Abschnitts eines Werkstücks mit einem flüssigen keramischen Photopolymer;
(b) Bestrahlen eines Abschnitts des flüssigen keramischen Photopolymers benachbart des gehärteten Abschnitts durch ein Fenster, das in Kontakt mit dem flüssigen keramischen Photopolymer ist;
(c) Entnehmen des Werkstücks aus dem ungehärteten flüssigen keramischen Photopolymer;
(d) Wiederholen der Schritte (a) - (c), bis eine keramische Gießform (900, 901) gebildet ist, wobei die keramische Gießform (900, 901) eine integrierte Kern-Schale-Form mit einem Kern (900), einer den Kern (900) umgebenden Schale (901), einer Kavität (903) zwischen dem Kern (900) und der Schale (901), eine erste Öffnung, die sich durch die Schale (901) zu der Kavität (903) erstreckt, um ein Gussteil zu erzeugen, und eine zweite Öffnung (905), die sich durch die Schale (901) zu der Kavität (903) erstreckt, um ein Stützelement aufzunehmen, aufweist, und
(e) Einführen eines Stützelements durch die zweite Öffnung (905) in die Kavität (903).

2. Verfahren nach Anspruch 1, ferner umfassend das Gießen eines flüssigen Metalls in die erste Öffnung und das Erstarren des flüssigen Metalls, um das Gussteil zu bilden.

3. Verfahren nach Anspruch 1 oder Anspruch 2, wobei das Stützelement mindestens eine Kugel (906) ist.

4. Verfahren nach einem der Ansprüche 1-3, wobei das Stützelement mindestens ein Metallblech (1106) ist.

5. Verfahren nach einem der Ansprüche 1-4, wobei das Stützelement aus einem keramischen feuerfesten Metall gefertigt ist und so konstruiert ist, dass es an verschiedenen Abschnitten der keramischen Gießform (900, 901) Steifigkeit bereitstellt.

6. Verfahren nach einem der Ansprüche 1-5, wobei das Stützelement eine Schmelztemperatur aufweist, die höher ist als die Schmelztemperatur eines beim Gießen verwendeten Metalls.

7. Verfahren nach einem der Ansprüche 1-6, wobei es sich bei dem Stützelement um mehrere Aluminiumoxidkugeln (906) handelt, die in der zweiten Öffnung (905) aufgenommen sind, um die keramische Gießform (900, 901) zu stützen.

8. Verfahren nach einem der Ansprüche 1-7, wobei die keramische Gießform (900, 901) mit mindestens einem Stützelement (1310, 1410, 1510) an einem äußeren Abschnitt der keramischen Gießform (900, 901) konfiguriert ist, wobei das mindestens eine Stützelement (1310, 1410, 1510) an dem äußeren Abschnitt aus einem feuerfesten Keramik-Metall hergestellt ist und eine Schmelztemperatur aufweist, die höher ist als die Schmelztemperatur eines beim Gießen verwendeten Metalls.

9. Verfahren zum Vorbereiten eines Gussteils, umfassend:
Bilden einer gedruckten keramischen Gießform (900, 901), wobei die keramische Gießform (900, 901) aufweist:
eine integrierte Kern-Schale-Form mit einem Kern (900), einer den Kern (900) umgebenden Schale (901), einer Kavität (903) zwischen dem Kern (900) und der Schale (901), einer ersten Öffnung, die sich durch die Schale (901) zu der Kavität (903) erstreckt, um das Gussteil zu erzeugen, und einer zweiten Öffnung (905), die sich durch die Schale (901) zu der Kavität (903) erstreckt, um ein Stützelement aufzunehmen, und Einsetzen eines Stützelements durch die zweite Öffnung (905) in die Kavität (903).

10. Verfahren nach Anspruch 9, ferner umfassend das Gießen eines flüssigen Metalls in die erste Öffnung und Erstarren des flüssigen Metalls, um das Gussteil zu bilden.

11. Verfahren nach Anspruch 9 oder 10, wobei das Stützelement eine Schmelztemperatur aufweist, die höher ist als die Schmelztemperatur eines beim Gießen verwendeten Metalls.

12. Verfahren nach einem der Ansprüche 9-11, wobei es sich bei dem Stützelement um mehrere Aluminiumoxidkugeln (906) handelt, die in der zweiten Öffnung (905) untergebracht sind, um die keramische Gießform (900, 901) zu stützen.

13. Vorrichtung zum Vorbereiten eines Gussteils gemäß einem Verfahren nach einem der Ansprüche 9-10, umfassend:
eine gedruckte keramische Gießform (900, 901), wobei die keramische Gießform (900, 901) eine integrierte Kern-Schale-Form mit einem Kern (900), eine den Kern (900) umgebende Schale (901), eine Kavität (903) zwischen dem Kern (900) und der Schale (901), eine erste Öffnung, die sich durch die Schale (901) zu der Kavität (903) erstreckt, um das Gussteil zu erzeugen, und eine zweite Öffnung (905), die sich durch die Schale (901) zu der Kavität (903) erstreckt, um ein Stützelement aufzunehmen, und ein Stützelement, das durch die zweite Öffnung (905) in die Kavität (903) eingesetzt wird, aufweist.

14. Vorrichtung nach Anspruch 13, wobei das Stützelement eine Schmelztemperatur aufweist, die höher ist als die Schmelztemperatur eines beim Gießen verwendeten Metalls.

15. Vorrichtung nach Anspruch 13 oder Anspruch 14, wobei die gedruckte keramische Gießform (900, 901) mit mindestens einem Stützelement (1310, 1410, 1510) an einem äußeren Abschnitt der gedruckten keramischen Gießform (900, 901) konfiguriert ist, wobei das mindestens eine Stützelement (1310, 1410, 1510) an dem äußeren Abschnitt aus einem keramischen hochschmelzenden Metall hergestellt ist und eine Schmelztemperatur aufweist, die höher ist als die Schmelztemperatur eines beim Gießen verwendeten Metalls.

## Revendications

1. Procédé de fabrication d'une lingotière de coulée en céramique (900, 901), comprenant :
(a) la mise en contact d'une partie durcie d'une pièce avec un photopolymère céramique liquide ;
(b) l'irradiation d'une partie du photopolymère céramique liquide de manière adjacente à la partie durcie par une fenêtre établissant un contact avec le photopolymère céramique liquide ;
(c) le retrait de la pièce du photopolymère céramique liquide non durci ;
(d) la répétition des étapes (a) - (c) jusqu'à ce qu'une lingotière de coulée en céramique (900, 901) soit formée, la lingotière de coulée en céramique (900, 901) comprenant un moule intégré à enveloppe/cœur présentant un cœur (900), une enveloppe (901) entourant le cœur (900), une cavité (903) entre le cœur (900) et l'enveloppe (901), une première ouverture s'étendant à travers l'enveloppe (901) vers la cavité (903) pour créer un article coulé , et une deuxième ouverture (905) s'étendant à travers l'enveloppe (901) vers la cavité (903) pour recevoir un élément de support, et
(e) l'insertion d'un élément de support à travers la deuxième ouverture (905) dans la cavité (903).

2. Procédé selon la revendication 1, comprenant en outre le déversement d'un métal liquide dans la première ouverture et la solidification du métal liquide pour former l'article coulé.

3. Procédé selon la revendication 1 ou la revendication 2, dans lequel l'élément de support est au moins une sphère (906).

4. Procédé selon l'une quelconque des revendications 1 - 3, dans lequel l'élément de support est au moins une feuille métallique (1106).

5. Procédé selon l'une quelconque des revendications 1 - 4, dans lequel l'élément de support est fait d'un métal réfractaire en céramique et est pensé pour apporter de la rigidité sur diverses parties de la lingotière de coulée en céramique (900, 901).

6. Procédé selon l'une quelconque des revendications 1 - 5, dans lequel l'élément de support présente une température de fusion qui est supérieure à la température de fusion d'un métal utilisé lors de la coulée.

7. Procédé selon l'une quelconque des revendications 1 - 6, dans lequel l'élément de support est une pluralité de sphères en alumine (906) logées dans la deuxième ouverture (905) pour fournir un support à la lingotière de coulée en céramique (900, 901).

8. Procédé selon l'une quelconque des revendications 1 - 7, dans lequel la lingotière de coulée en céramique (900, 901) est configurée avec au moins un élément de support (1310, 1410, 1510) sur une partie extérieure de la lingotière de coulée en céramique (900, 901), l'au moins un élément de support (1310, 1410, 1510) sur la partie extérieure étant fait d'un métal réfractaire en céramique et présentant une température de fusion qui est plus élevée que la température de fusion d'un métal utilisé lors de la coulée.

9. Procédé de préparation d'un composant coulé, comprenant :
la formation d'une lingotière de coulée en céramique (900, 901) imprimée, la lingotière de coulée en céramique (900, 901) comprenant
un moule intégré à enveloppe-cœur présentant un cœur (900), une enveloppe (901) entourant le cœur (900), une cavité (903) entre le cœur (900) et l'enveloppe (901), une première ouverture s'étendant à travers l'enveloppe (901) vers la cavité (903) pour créer le composant coulé, et une deuxième ouverture (905) s'étendant à travers l'enveloppe (901) vers la cavité (903) pour recevoir un élément de support, et
l'insertion d'un élément de support à travers la deuxième ouverture (905) dans la cavité (903).

10. Procédé selon la revendication 9, comprenant en outre le déversement d'un métal liquide dans la première ouverture et la solidification du métal liquide pour former le composant coulé.

11. Procédé selon la revendication 9 ou la revendication 10, dans lequel l'élément de support présente une température de fusion qui est plus élevée que la température de fusion d'un métal utilisé lors de la coulée.

12. Procédé selon l'une quelconque des revendications 9- 11, dans lequel l'élément de support est une pluralité de sphères en alumine (906) logées dans la deuxième ouverture (905) pour fournir un support à la lingotière de coulée en céramique (900, 901).

13. Appareil pour préparer un composant coulé conformément à un procédé selon l'une quelconque des revendications 9- 10, comprenant :
une lingotière de coulée en céramique (900, 901) imprimée, la lingotière de coulée en céramique (900, 901) comprenant,
un moule intégré à enveloppe-cœur présentant un cœur (900), une enveloppe (901) entourant le cœur (900), une cavité (903) entre le cœur (900) et l'enveloppe (901), une première ouverture s'étendant à travers l'enveloppe (901) vers la cavité (903) pour créer le composant coulé, et une deuxième ouverture (905) s'étendant à travers l'enveloppe (901) vers la cavité (903) pour recevoir un élément de support, et
un élément de support inséré à travers la deuxième ouverture (905) dans la cavité (903).

14. Appareil selon la revendication 13, dans lequel l'élément de support présente une température de fusion qui est plus élevée que la température de fusion d'un métal utilisé lors de la coulée.

15. Appareil selon la revendication 13 ou la revendication 14, dans lequel la lingotière de coulée en céramique (900, 901) imprimée est configurée avec au moins un élément de support (1310, 1410, 1510) sur une partie extérieure de la lingotière de coulée en céramique (900, 901) imprimée, l'au moins un élément de support (1310, 1410, 1510) sur la partie extérieure étant fait d'un métal réfractaire en céramique et présentant une température de fusion qui est plus élevée que la température de fusion d'un métal utilisé lors de la coulée.
